# FASCICULE DE BREVET EUROPEEN

(11) **EP 0 842 820 B1**
(45) Date de publication et mention de la délivrance du brevet: **23.01.2002**
(21) Numéro de dépôt: 97402722.9
(22) Date de dépôt: 14.11.1997
(51) Int. Cl.: B60R 5/04

(54) **Dispositif de relevage d'une tablette arrière rigide réalisant un moyen de retenue du/des dossiers de siège délimitant un compartiment à bagages de véhicule automobile**
Vorrichtung zum Anheben einer Heckplatte und zum Rückhalten eines Rücklehnensitzes zur Begrenzung eines Kraftfahrzeug- Kofferraumes
Device for lifting a rear parcel shelf and for restraining a seat backrest limiting a vehicle boot

(30) Priorité: 15.11.1996 FR 9613989
(43) Date de publication de la demande: 20.05.1998
(73) Titulaire: RENAULT, 92109 Boulogne-Billancourt (FR)
(72) Inventeur: Bendjellal, Farid, 92500 Rueil Malmaison (FR)

(56) Documents cités:
- DE-A- 2 718 837
- DE-A- 19 533 806
- DE-A- 19 604 214
- FR-A- 2 222 852

## Description

L'invention a pour objet un dispositif de relevage d'une tablette arrière rigide occultant le contenu d'un compartiment à bagages de véhicule automobile fermé par un hayon, et plus particulièrement un dispositif permettant une retenue du/des dossier(s) de siège délimitant ledit compartiment à bagages.

Afin d'occulter un compartiment à bagages de véhicule automobile, fermé par un hayon, il est généralement utilisé une tablette rigide montée à pivotement autour d'un axe transversal localisé à proximité des dossiers de siège arrière délimitant ledit compartiment. Lorsque l'on souhaite charger le compartiment, l'ouverture du hayon entraîne le pivotement de la tablette arrière, autour de l'axe de pivotement, par l'intermédiaire de moyens de liaisons tels que des câbles latéralement disposés de part et d'autre de la tablette.

Lorsqu'un véhicule automobile subit un choc violent contre un obstacle, le chargement localisé dans le compartiment à bagages vient en appui contre le/les dossier(s) de la banquette arrière, risquant de faire céder ces derniers et de laisser le chargement entrer dans l'habitacle dudit véhicule, ce qui peut-être dangereux pour les occupants dudit véhicule. De plus le déplacement des dossiers entraîne des contraintes supplémentaires sur les personnes ceinturées aux places arrières.

La publication FR-A- 2 222 852 décrit un dispositif de relevage d'une tablette mobile de compartiment arrière ayant les caractéristiques du préambule de la revendication 1. Le hayon porte un enrouleur qui reçoit une sangle liée à ce dernier par une extrémité, l'autre extrémité étant liée à la partie arrière de ladite tablette par une attache. Lorsque le hayon s'ouvre, la sangle est déroulée jusqu'à obtenir le développement de la longueur voulue. La poursuite de l'ouverture du hayon entraîne alors le pivotement de la tablette.

Une telle disposition ne permet pas la retenue du dossier de siège en cas de choc, la sangle étant liée uniquement à la tablette. De plus l'enrouleur a pour fonction de ranger la sangle et d'éviter ainsi que cette dernière ne traîne dans le compartiment à bagages. Ce dispositif peut relever la tablette rigide sans cet enrouleur.

La publication DE-A-195 33 806 décrit un dispositif d'obturation d'un compartiment à bagages, réalisé par un rideau souple qui s'étend du hayon au dossier de siège. Le rideau souple est lié par une extrémité à un enrouleur porté par le hayon et au dossier de siège par une autre extrémité libre.

Lorsque le rideau n'est pas en position d'obturation, pour augmenter le volume de chargement par exemple, il n'existe plus de liaison entre le hayon et le dossier de siège.

Afin de palier ces inconvénients, l'invention a pour objet un dispositif permettant le relevage d'une tablette arrière rigide, tout en assurant une retenue des dossiers de sièges délimitant le compartiment à bagages, lors d'un choc du véhicule contre un obstacle.

L'invention a également pour objet un dispositif de relevage d'une tablette arrière rigide permettant la retenue du dossier de siège même lorsque le compartiment à bagages n'est pas obturé par ladite tablette.

L'invention a également pour objet un dispositif de relevage d'une tablette arrière rigide permettant une retenue d'un dossier constitué de partie fractionnable.

Selon une caractéristique de l'invention, au moins une sangle qui s'étend longitudinalement au dessus de l'espace défini par le compartiment à bagages, traverse un passage de sangle réalisée dans une partie arrière de la tablette rigide, ladite sangle comportant une extrémité qui coopère avec un enrouleur, pourvu d'un ressort de rappel et d'un moyen de blocage dynamique de ladite sangle, et une extrémité libre liée à une partie du véhicule susceptible d'avoir un mouvement relatif par rapport au support dudit enrouleur de sangle lors d'un choc du véhicule contre un obstacle.

Selon une autre caractéristique de l'invention, l'extrémité libre de la sangle comporte un moyen d'accrochage qui coopère de façon démontable avec un élément de réception localisé sur le hayon en opposition à l'extrémité lié à l'enrouleur porté par la partie supérieure du dossier de banquette arrière.

Selon une autre caractéristique de l'invention, l'extrémité libre de la sangle comporte un moyen d'accrochage qui coopère de façon démontable avec un élément de réception localisé sur le hayon en opposition à l'extrémité lié à l'enrouleur localisé dans le plancher de charge à proximité du dossier de siège.

Selon une autre caractéristique de l'invention, le dossier de siège comporte un renvoi de sangle en correspondance avec la tablette rigide.

Selon une autre caractéristique de l'invention, l'extrémité libre de la sangle comporte un moyen d'accrochage qui coopère de façon démontable avec un élément de réception localisé sur la partie supérieure du dossier de banquette arrière en opposition à l'extrémité lié a l'enrouleur porté par le hayon.

Selon une autre caractéristique de l'invention, l'enrouleur est lié rigidement à une partie du plancher de charge adjacente au hayon, dans la position fermeture dudit hayon.

Selon une autre caractéristique de l'invention, le hayon comporte un renvoi de sangle en correspondance avec la tablette rigide dans la position fermeture dudit hayon.

Selon une autre caractéristique de l'invention, la tablette rigide comporte un renvoi de sangle qui coopère avec des éléments de structure de caisse, dans la position fermeture du hayon.

Selon une autre caractéristique de l'invention, la sangle est disposée perpendiculairement au dossier de banquette arrière en correspondance avec une zone délimitant sensiblement le tiers transversal dudit dossier.

Selon une autre caractéristique de l'invention, le moyen d'accrochage est conformé en un embout prolongé par deux crochets distincts qui coopèrent chacun, de façon indépendante, avec une partie de dossier fractionnable par l'intermédiaire d'éléments de réception distincts.

Selon une autre caractéristique de l'invention, le moyen d'accrochage coopère avec un élément de réception lié au dessous de l'assise de la banquette arrière en position verticale.

Selon une autre caractéristique de l'invention, le moyen d'accrochage coopère avec un élément de réception localisé sur la partie arrière des dossiers de sièges avant.

Selon une autre caractéristique de l'invention, un moyen d'absorption de l'énergie cinétique complète l'enrouleur.

D'autres caractéristiques et avantages de l'invention apparaîtront à la lecture de la description d'exemples de réalisation d'un dispositif de relevage d'une tablette arrière rigide réalisant un moyen de retenue du/des dossier(s) de siège délimitant un compartiment à bagages de véhicule automobile en référence aux dessins annexés dans lesquels :
- la figure 1 représente un dispositif de relevage d'une tablette rigide, selon l'invention.
- la figure 2 représente une vue de profil du dispositif de relevage d'une tablette rigide, dans la position ouverte du hayon.
- la figure 3 représente un passage de sangle dans la tablette rigide.
- la figure 4 représente un dispositif de relevage d'une tablette rigide réalisé par une seule sangle.
- la figure 5 représente l'accrochage de la sangle sur un dossier fractionnable.
- la figure 6 représente une vue de profil de la sangle reliée à un élément de réception localisé sous l'assise de la banquette.
- la figure 7 représente une variante du dispositif de relevage d'une tablette rigide, l'enrouleur étant intégré au plancher de charge à proximité du siège.
- la figure 8 représente une autre variante du dispositif de relevage d'une tablette rigide.
- la figure 9 représente un exemple de liaison de l'enrouleur avec le plancher de charge, selon la variante représentée à la figure 8.

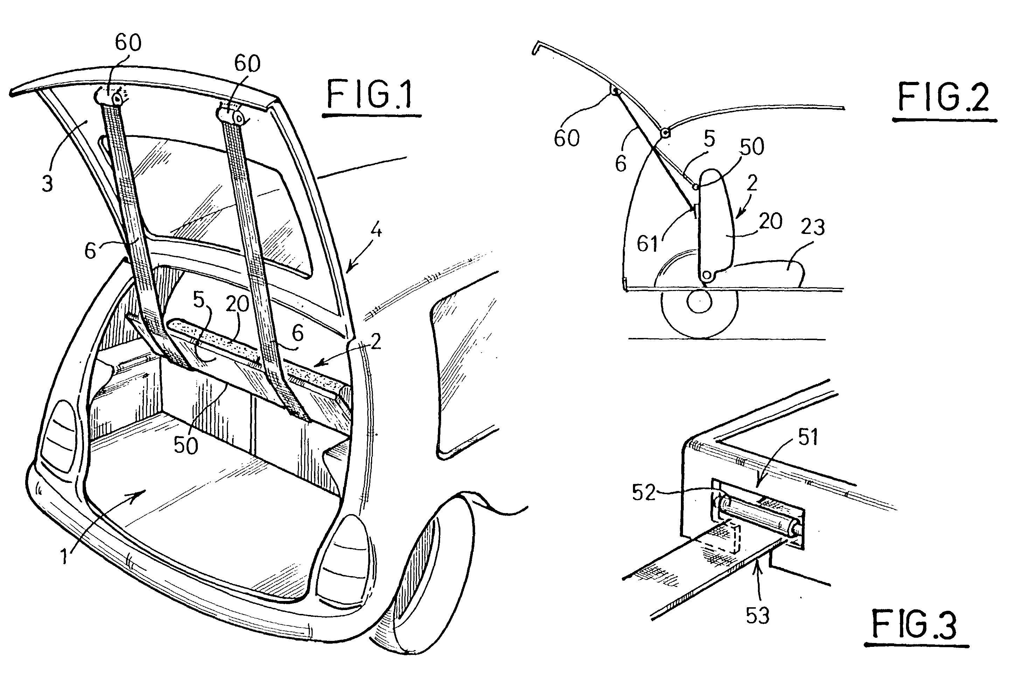

Tel que représenté aux figures 1, 2 et 4, le véhicule comporte un compartiment à bagages 1 délimité, en sa partie avant, par une banquette arrière 2, pouvant être constituée d'un dossier 20 fractionné en plusieurs morceaux. Le compartiment à bagages 1 est fermé par l'intermédiaire d'un hayon 3 monté à pivotement autour d'un axe transversal localisé au niveau de la partie arrière du pavillon 4 du véhicule. Le montage à pivotement du hayon 3 est pris ici à titre d'exemple. Tout autre moyen qui dégage l'accès au compartiment à bagages 1 est compatible avec l'invention. Le compartiment à bagages 1 est obturé par une tablette rigide 5, montée à pivotement autour d'un axe transversal 50 localisé au niveau de la partie supérieure du dossier 20 de la banquette arrière 2, et qui s'étend jusqu'au hayon 3 en position fermée. L'utilisation de plusieurs sièges indépendants en lieu et place de la banquette arrière 2 ne change en rien le comportement de l'invention.

Tel que représenté à la figure 2, une sangle 6 s'étend longitudinalement de la partie intérieure du hayon 3 au dossier 20 de la banquette arrière 2, côté compartiment à bagages 1. La sangle 6 est montée dans un enrouleur 60 localisé dans le hayon 3. L'enrouleur 60 comporte un ressort de rappel, afin de conserver la sangle 6 tendue, et un dispositif de blocage dynamique tel qu'utilisé dans les ceintures de sécurité. Un moyen d'absorption de l'énergie cinétique (non représenté) peut venir en complément de l'enrouleur 60 ou être localisé au niveau du moyen d'accrochage 62. La sangle 6 comporte, à son extrémité libre 61, un moyen d'accrochage 62 qui coopère avec au moins un élément de réception 21 porté par le dossier 20, tel que représenté à la figure 2.

Dans le cas de l'utilisation d'un dossier 20 de banquette arrière 2 non fractionnable, la sangle 6 sera localisée, de préférence, dans la zone un tiers du dossier 20, côté conducteur. Cette zone correspondant généralement à une zone d'impact du chargement lors d'un choc frontal. La zone peut correspondre également à la position milieu du dossier 20, afin d'obtenir une bonne retenue dudit dossier 20, quelque soit le type de conduite installée dans le véhicule.

Dans le cas de l'utilisation d'un dossier fractionnable, tel que représenté à la figure 1, il est possible d'utiliser deux sangles 6 identiques coopérant chacune avec une partie de dossier 20. Celles-ci sont aussi utilisable dans le cas de sièges indépendants ou lors de l'utilisation de deux sangles 6 sur un dossier 20 monobloc d'une banquette arrière 2 afin de mieux répartir les contraintes de retenue sur chaque sangle 6.

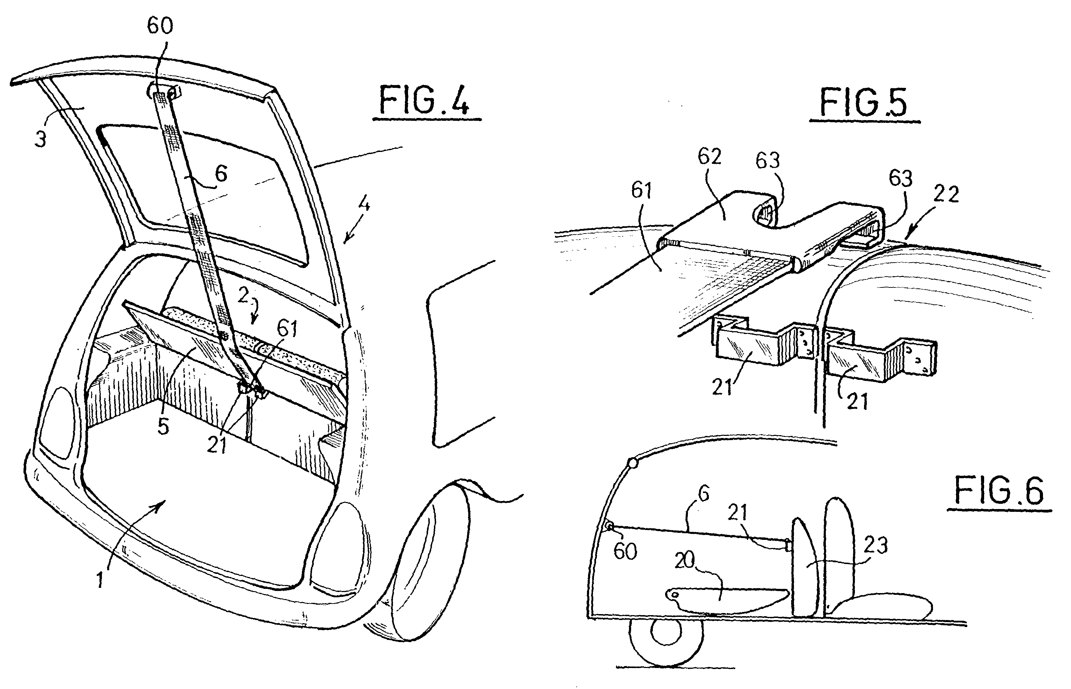

Afin de limiter le coût de l'utilisation de deux sangles 6, il est possible d'en utiliser une seule dont l'extrémité libre 61 de ladite sangle 6 est en correspondance avec la jonction 22 de deux parties de dossier 20 fractionnable délimitant le compartiment à bagages 1, tel que représenté à la figure 4. Le moyen d'accrochage 62, localisé à l'extrémité libre 61 de la sangle 6 est conformé alors en un embout prolongé par deux crochets 63 distincts. Chaque crochet 63 est en correspondance avec un élément de réception 21 localisé sur une partie de dossier 20 fractionnable distinct, tel que représenté à la figure 5.

La tablette rigide 5 comporte un passage de sangle 51 réalisé dans la partie arrière de ladite tablette 5. Afin d'améliorer le coulissement de la sangle 6 dans le passage 51, ce dernier peut être pourvu d'un moyen de guidage 52, tel qu'un rouleau par exemple. Le passage de sangle 51 est une lumière comportant une ouverture latérale 53, tel que représenté à la figure 3.

Lorsque le hayon 3 est ouvert, la sangle 6 se déroule jusqu'à une certaine longueur, puis entraîne la tablette rigide 5 en pivotement autour de son axe 50. S'il est souhaitable d'enlever la tablette rigide 5 afin d'augmenter la capacité de chargement, chaque sangle 6 est sortie du passage 51, réalisé dans la tablette 5, par l'intermédiaire de l'ouverture 53. La tablette rigide 5 peut alors être démontée sans pour autant désolidariser le dispositif de retenue de dossier 20, effectuée par la sangle 6.

Dans le cas de l'utilisation d'un dossier 20 fractionnable et d'une seule sangle 6, si un des dossiers 20 doit être rabattu, il suffit de désolidariser le moyen d'accrochage 62 des éléments de réception 21. Le dossier 20 est alors basculé et le moyen d'accrochage 62 positionné dans le moyen de réception 21 correspondant au dossier 20 encore en position verticale.

Dans le cas de l'utilisation de deux sangles 6, il suffit de dissocier le moyen d'accrochage 62 de l'élément de réception 21 correspondant et de basculer le dossier 20. L'extrémité libre 61 de la sangle 6 peut alors être accrochée à l'arrière du dossier 20 d'un siège avant muni d'éléments de réceptions secondaire (non représentés) du moyen d'accrochage 62. Les moyens de réceptions secondaire peuvent être aussi réalisés dans le plancher afin d'effectuer un dispositif d'arrimage de la charge.

Lorsque le dossier 20 de banquette arrière 1 est complètement basculé, l'assise 23 de ladite banquette 2 est généralement en position verticale. Le dessous de l'assise étant dirigé vers le compartiment à bagages 1. Des éléments de réception 21 peuvent être réalisés sous l'assise 23 afin d'optimiser la retenue de charge par l'utilisation des sangles 6, tel que représenté à la figure 6.

Sans modifier le fonctionnement de l'invention, il est possible de localisé l'enrouleur 60 sur le dossier de siège 20. Le moyen d'accrochage 62 porté par l'extrémité libre 61 de la sangle 6 étant alors en relation avec un élément de réception 21 porté par le hayon 3.

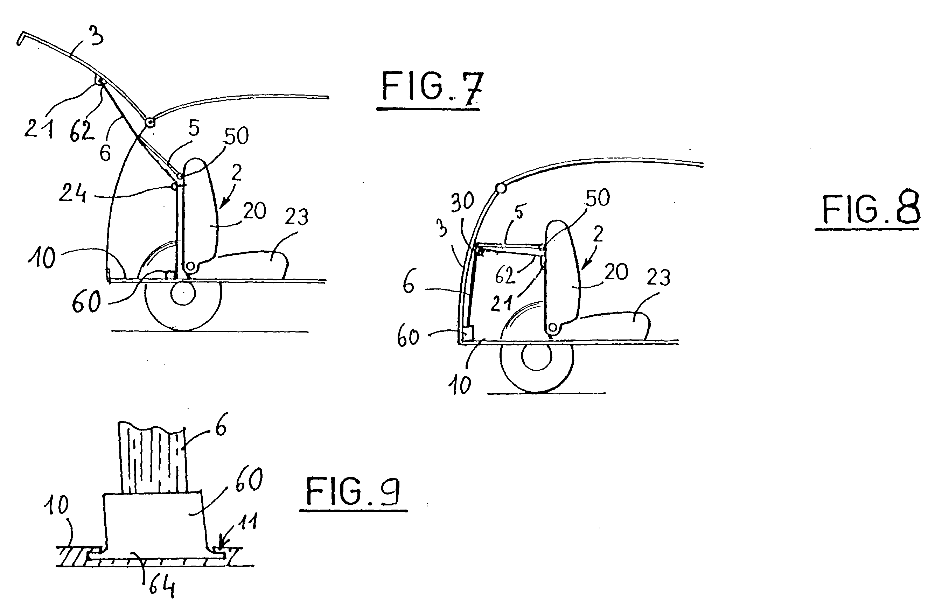

Selon une variante représentée à la figure 7, l'enrouleur 60 est localisé dans le plancher de charge 10 à proximité du dossier de siège 20. Le dossier 20 comporte un renvoi 24 fixé au dos dudit dossier 20. La sangle 6 est guidée par le renvoi 24 et traverse le passage de sangle 51 réalisé dans la partie arrière de la tablette rigide 5. L'extrémité libre 61 est liée à un élément de réception 21, porté par le hayon 3, par l'intermédiaire du moyen d'accrochage 62.

Selon une autre variante représentée à la figures 8, l'enrouleur 60 est porté par la partie inférieure du hayon 3 et l'extrémité libre 61 de la sangle 6 est en relation avec le dossier de siège 20, telle que décrit précédemment pour les solutions exposées aux figures 1, 2 et 4. Le hayon 3 comporte un renvoi 30 de la sangle 6, localisé à la hauteur de la tablette rigide 5. La sangle 6 peut circuler dans l'habillage intérieur du hayon 3 entre l'enrouleur 60 et le renvoi 30 de sangle. A la sortie du renvoi 30, la sangle 6 coopère avec la tablette rigide 5 par l'intermédiaire du passage de sangle 51 pour se prolonger jusqu'à son accrochage 62 avec le dossier de siège 20.

Tel que représenté à la figure 9, lorsque le hayon 3 est en position fermeture, l'enrouleur 60 se verrouille sur la partie du plancher de charge 10 adjacente au hayon 3, par coopération de la base 64 dudit enrouleur 60 avec une rainure 11 réalisée dans ledit plancher de charge 10, par exemple. Le verrouillage ainsi réalisé permet une reprise de l'effort par le plancher de charge 10, ce qui peut autoriser une fixation, plus légère, de l'enrouleur 60 sur le hayon 3.

Le renvoi 30 peut-être intégré dans la partie arrière de la tablette rigide 5 afin que les efforts ne passent pas par la structure du hayon 3. Le renvoi 30 peut-être alors une barre qui coopère, par ses extrémités, avec la structure de caisse, en position fermée de la tablette rigide 5. Le renvoi 30 peut servir de guidage de la sangle 6 dans la tablette rigide 5.

Dans le cas ou la tablette 5 est enlevée la sangle 6 passe directement de l'enrouleur 60 vers le dossier de siège 20.

## Revendications

1. Dispositif de relevage d'une tablette arrière rigide (5) réalisant un moyen de retenue d'un dossier (20) de siège (2) délimitant un compartiment à bagages (1) de véhicule automobile, ledit compartiment à bagages (1) étant fermé dans sa partie arrière par un hayon (3) et obturé dans sa partie supérieure par une tablette rigide (5) montée à pivotement autour d'un axe transversal (50) localisé sensiblement à proximité de la partie supérieure du dossier (20) de siège (2), **caractérisé en ce qu'**au moins une sangle (6) qui s'étend longitudinalement au dessus de l'espace défini par le compartiment à bagages (1), traverse un passage de sangle (51) réalisé dans une partie arrière de la tablette rigide (5), ladite sangle (6) comportant une extrémité qui coopère avec un enrouleur (60), pourvu d'un ressort de rappel et d'un moyen de blocage dynamique de ladite sangle (6), et une extrémité libre (61) liée à une partie du véhicule susceptible d'avoir un mouvement relatif par rapport au support dudit enrouleur de sangle (60) lors d'un choc du véhicule contre un obstacle.

2. Dispositif selon la revendication 1, **caractérisé en ce que** l'extrémité libre (61) de la sangle (6) comporte un moyen d'accrochage (62) qui coopère de façon démontable avec un élément de réception (21) localisé sur le hayon (3) en opposition à l'extrémité liée à l'enrouleur (60) porté par la partie supérieure du dossier (20) de banquette arrière (2).

3. Dispositif selon la revendication 1, **caractérisé en ce que** l'extrémité libre (61) de la sangle (6) comporte un moyen d'accrochage (62) qui coopère de façon démontable avec un élément de réception (21) localisé sur la partie supérieure du dossier (20) de banquette arrière (2) en opposition à l'extrémité liée à l'enrouleur (60) porté par le hayon (3).

4. Dispositif selon la revendication 3, **caractérisé en ce que** l'enrouleur (60) est lié rigidement à une partie du plancher de charge (10) adjacente au hayon (3), dans la position fermeture dudit hayon (3).

5. Dispositif selon l'une quelconque des revendications 3 et 4, **caractérisé en ce que** le hayon (3) comporte un renvoi de sangle (30) en correspondance avec la tablette rigide (5) dans la position fermeture dudit hayon (3).

6. Dispositif selon l'une quelconque des revendications 3 et 4, **caractérisé en ce que** la tablette rigide (5) comporte un renvoi de sangle (30) qui coopère avec des éléments de structure de caisse, dans la position fermeture du hayon (3).

7. Dispositif selon l'une quelconque des revendications 1 à 3, **caractérisé en ce que** la sangle (6) est disposée perpendiculairement au dossier (20) de banquette arrière (2) en correspondance avec une zone délimitant sensiblement le tiers transversal dudit dossier (20).

8. Dispositif selon la revendication 3, **caractérisé en ce que** le moyen d'accrochage (62) est conformé en un embout prolongé par deux crochets (63) distincts qui coopèrent chacun, de façon indépendante, avec une partie de dossier (20) fractionnable par l'intermédiaire d'éléments de réception (21) distincts.

9. Dispositif selon la revendication 3, **caractérisé en ce que** le moyen d'accrochage (62) coopère avec un élément de réception (21) lié au dessous de l'assise (23) de la banquette arrière (20) en position verticale.

10. Dispositif selon la revendication 3, **caractérisé en ce que** le moyen d'accrochage (62) coopère avec un élément de réception (21) localisé sur la partie arrière des dossiers de sièges avant.

11. Dispositif selon l'une quelconque des revendications 1 à 4, **caractérisé en ce qu'**un moyen d'absorption de l'énergie cinétique complète l'enrouleur (60).

## Claims

1. A device for raising a rigid rear shelf (5) forming a retaining means for a back (20) of a seat (2) bounding a baggage compartment (1) of an automobile vehicle, the rear portion of the baggage compartment (1) being closed by a hatchback (3) and its upper portion being closed off by a rigid shelf (5) mounted to pivot about a transverse axis (50) located substantially in the vicinity of the upper portion of the back (20) of the seat (2), **characterised in that** at least one belt (6) which extends longitudinally above the space formed by the baggage compartment (1) passes through a belt feed (51) formed in a rear portion of the rigid shelf (5), the belt (6) comprising an end which cooperates with a roller (60) provided with a recall spring and a means for the dynamic locking of the belt (6) and a free end (61) connected to a portion of the vehicle which may move relatively with respect to the belt roller (60) when the vehicle collides with an obstacle.

2. A device as claimed in claim 1, **characterised in that** the free end (61) of the belt (6) comprises a hooking means (62) which cooperates in a detachable way with a reception member (21) located on the hatchback (3) in opposition to the end connected to the roller (60) borne by the upper portion of the back (20) of the rear seat (2).

3. A device as claimed in claim 1, **characterised in that** the free end (61) of the belt (6) comprises a hooking means (62) which cooperates in a detachable way with a reception member (21) located on the upper portion of the back (20) of the rear seat (2) in opposition to the end connected to the roller (60) borne by the hatchback (3).

4. A device as claimed in claim 3, **characterised in that** the roller (60) is rigidly connected to a portion of the load-bearing floor (10) adjacent to the hatchback (3) in the closed position of this hatchback (3).

5. A device as claimed in any one of claims 3 and 4, **characterised in that** the hatchback (3) comprises a belt return (30) at the location of the rigid shelf (5) in the closed position of the hatchback (3).

6. A device as claimed in any one of claims 3 and 4, **characterised in that** the rigid shelf (5) comprises a belt return (30) which cooperates with structural bodywork members in the closed position of the hatchback (3).

7. A device as claimed in any one of claims 1 to 3, **characterised in that** the belt (6) is disposed perpendicular to the back (20) of the rear seat (2) at the location of a zone substantially bounding the transverse third of the back (20).

8. A device as claimed in claim 3, **characterised in that** the hooking means (62) is shaped as an end-piece extended by two separate hooks (63) which each cooperate in an independent manner with a portion of the back (20) that can be divided by means of separate reception members (21).

9. A device as claimed in claim 3, **characterised in that** the hooking means (62) cooperates with a reception member (21) connected to the bottom of the seat (23) of the rear seat (20) in the vertical position.

10. A device as claimed in claim 3, **characterised in that** the hooking means (62) cooperates with a reception member (21) located on the rear portion of the front seat backs.

11. A device as claimed in any one of claims 1 to 4, **characterised in that** the roller (60) further comprises a kinetic energy absorption member.

## Patentansprüche

1. Vorrichtung zum Anheben einer starren rückwärtigen Platte (5), die ein Mittel zum Festhalten einer Lehne (20) eines Sitzes (2) verkörpert, welche einen Kraftfahrzeugkofferraum (1) abgrenzt, wobei der Kofferraum (1) an seinem hinteren Teil durch eine Heckklappe (3) verschlossen und an seinem oberen Teil durch eine starre Plätte (5) verschlossen wird, die schwenkbar um eine Querachse (50) montiert ist, die sich im wesentlichen in Nähe des oberen Teils der Lehne (20) des Sitzes (2) befindet, **dadurch gekennzeichnet, daß** wenigstens ein Gurt (6), der sich in Längsrichtung über dem von dem Kofferraum (1) definierten Raum erstreckt, eine Gurtdurchführung (51) durchläuft, die in einem hinteren Teil der starren Platte (5) verwirklicht ist, wobei der Gurt (6) ein Ende, das mit einem Wickler (60) zusammenwirkt, der mit einer Rückholfeder und mit einem Mittel zur dynamischen Arretierung des Gurtes (6) versehen ist, und ein freies Ende (61) aufweist, das mit einem Teil des Fahrzeugs verbunden ist, der bei einem Aufprall des Fahrzeugs auf ein Hindernis eine Relativbewegung in Bezug auf die Halterung des Gurtwicklers (60) ausführen kann.

2. Vorrichtung nach Anspruch 1, **dadurch gekennzeichnet, daß** das freie Ende (61) des Gurtes (6) ein Mittel zum Einhaken (62) aufweist, das lösbar mit einem Aufnahmeelement (21) zusammenwirkt, welches auf der Heckklappe (3) in Gegenstellung zu dem Ende angeordnet ist, das mit dem vom oberen Teil der Lehne (20) der Rückbank (2) getragenen Wickler (60) verbunden ist.

3. Vorrichtung nach Anspruch 1, **dadurch gekennzeichnet, daß** das freie Ende (61) des Gurtes (6) ein Mittel zum Einhaken (62) aufweist, das lösbar mit einem Aufnahmeelement (21) zusammenwirkt, welches auf dem oberen Teil der Lehne (20) der Rückbank (2) in Gegenstellung zu dem Ende angeordnet ist, das mit dem von der Heckklappe (3) getragenen Wickler (60) verbunden ist.

4. Vorrichtung nach Anspruch 3, **dadurch gekennzeichnet, daß** der Wickler (60) in der Verschlußposition der Heckklappe (3) starr mit einem an die Heckklappe (3) angrenzenden Teil des Ladebodens (10) verbunden ist.

5. Vorrichtung nach einem der Ansprüche 3 und 4, **dadurch gekennzeichnet, daß** die Heckklappe (3) eine Gurtumlenkvorrichtung (30) in Entsprechung zur starren Platte (5) in der Verschlußposition der Heckklappe (3) aufweist.

6. Vorrichtung nach einem der Ansprüche 3 und 4, **dadurch gekennzeichnet, daß** die starre Platte (5) eine Gurtumlenkvorrichtung (30) aufweist, die in der Verschlußposition der Heckklappe (3) mit Elementen des Karosserieaufbaus zusammenwirkt.

7. Vorrichtung nach einem der Ansprüche 1 bis 3, **dadurch gekennzeichnet, daß** der Gurt (6) senkrecht zur Lehne (20) der Rückbank (2) angeordnet ist, einer Zone entsprechend, die im wesentlichen das Querdrittel der Lehne (20) abgrenzt.

8. Vorrichtung nach Anspruch 3, **dadurch gekennzeichnet, daß** das Mittel zum Einhaken (62) als ein Ansatzstück ausgebildet ist, das sich in zwei verschiedenen Haken (63) fortsetzt, die jeweils unabhängig voneinander mittels verschiedener Aufnahmeelemente (21) mit einem Teil der teilbaren Lehne (20) zusammenwirken.

9. Vorrichtung nach Anspruch 3, **dadurch gekennzeichnet, daß** das Mittel zum Einhaken (62) mit einem Aufnahmeelement (21) zusammenwirkt, das mit der Unterseite der Sitzfläche (23) der Rückbank (20) in vertikaler Position verbunden ist.

10. Vorrichtung nach Anspruch 3, **dadurch gekennzeichnet, daß** das Mittel zum Einhaken (62) mit einem Aufnahmeelement (21) zusammenwirkt, das an dem rückwärtigen Teil der Vordersitzlehnen angeordnet ist.

11. Vorrichtung nach einem der Ansprüche 1 bis 4, **dadurch gekennzeichnet, daß** ein Mittel zur Aufnahme der kinetischen Energie den Wickler (60) ergänzt.
